# EUROPÄISCHE PATENTANMELDUNG

(11) **EP 1 700 926 A1**
(43) Veröffentlichungstag der Anmeldung: **13.09.2006**
(21) Anmeldenummer: 05005097.0
(22) Anmeldetag: 09.03.2005
(51) Int. Cl.: C23C 4/10, C23C 4/12

(54) **Plasmagespritzte Schichten aus Aluminiumoxid**

(71) Anmelder: Degussa AG, 40474 Düsseldorf (DE)
(72) Erfinder: Deng, Yi, Dr., 63452 Hanau (DE); Oswald, Monika, Dr., 63454 Hanau (DE); Deller, Klaus, Dr., 63512 Hainburg (DE); Clasen, Rolf, Prof. Dr., 66386 St. Ingbert (DE); Fehringer, Georg, 66119 Saarbrücken (DE)

(57) **Zusammenfassung**

Plasmagespritzte Schichten aus Aluminiumoxid auf einem Substrat werden hergestellt, indem man als Ausgangspulver ein pyrogen hergestelltes Aluminiumoxid auf einem Substrat, beispielsweise ausgewählt aus der Gruppe Borosilikat und Stahl einsetzt.

## Beschreibung

Die Erfindung betrifft plasmagespritzte Schichten aus Aluminiumoxid auf einem Substrat sowie ein Verfahren zur Herstellung von plasmagespritzten Schichten aus Aluminiumoxid.

Plasmagespritzte Schichten aus Aluminiumoxid werden verwendet, um Bauteile von Schiffen und Flugzeugen vor Korrosion oder Verschleiß zu schützen.

Es ist bekannt, plasmagespritzte Schichten aus Aluminiumoxid aus mikrometerskaligen Pulvern herzustellen. Die Porengrößen können dabei in dem Bereich von 20 bis 40 µm liegen.

Die bekannten Al₂O₃-Schichten können nachteiligerweise Defekte, wie Poren und Risse aufweisen. Diese Restporosität kann sich negativ auf die Mikrohärte und die Verschleißbeständigkeit auswirken.

Es besteht somit die Aufgabe; plasmagespritzte Schichten aus Aluminiumoxid herzustellen, die ein Minimum an Defekten, wie Risse und Poren innerhalb der Schicht, aufweisen.

Gegenstand der Erfindung sind plasmagespritzte Schichten aus Aluminiumoxid auf einem Substrat, die dadurch gekennzeichnet sind, daß das Aluminiumoxid ein pyrogen hergestelltes Aluminiumoxid ist.

Die erfindungsgemäßen Schichten aus Aluminiumoxid können auf einem Substrat, bestehend aus Borosilikatgläsern, aufgebracht sein.

Ein weiteres Substrat kann Stahl sein.

Ein weiterer Gegenstand der Erfindung ist ein Verfahren zur Herstellung der plasmagespritzten Schicht aus Aluminiumoxid, welches dadurch gekennzeichnet ist, daß man als Ausgangspulver ein pyrogen hergestelltes Aluminiumoxid einsetzt.

Das pyrogen hergestellte (fumed) Aluminiumoxid kann mit dem bekannten Verfahren der Flammen- oder Hochtemperaturhydrolyse, insbesondere der Flammenhydrolyse zur Herstellung von pyrogen hergestellten Oxiden, hergestellt werden (Ullmann's Enzyklopädie der techn. Chemie, 4. Auflage, Band 21, Seite 464 (1982).

Als Aluminiumoxid kann beispielsweise das pyrogen hergestellte Aluminiumoxid C eingesetzt werden. Die physikalisch-chemischen Daten von Aluminiumoxid C sind in der Tabelle 1 aufgeführt.

In einer weiteren Ausführungsform der Erfindung kann man als Ausgangspulver ein pyrogen hergestelltes Aluminiumoxidgranulat einsetzen, welches hergestellt wird, indem pyrogen hergestelltes Aluminiumoxid in Wasser dispergiert und dann sprühgetrocknet wird.

Dieses Produkt ist bekannt aus WO 03/014021. Es ist ein Granulat auf der Basis von pyrogen hergestelltem Aluminiumoxid mit einem mittleren Teilchendurchmesser von 5,0 bis 150 µm und einer Stampfdichte von 300 bis 1.200 g/l.

**Tabelle 1**

| | | **Aluminiumoxid C** |
|---|---|---|
| Verhalten gegenüber Wasser | | hydrophil |
| Oberfläche nach BET¹⁾ | m²/g | 100 ± 15 |
| Mittlere Größe der Primärteilchen | nm | 13 |
| Stampfdichte ca. Wert²⁾ verdichtete Ware | g/l | ca. 50 |
| Spezifisches Gewicht¹⁰⁾ | g/ml | ca. 3,2 |
| Trocknungsverlust³⁾ bei Verlassen des Lieferwerkes | % | < 5,0 |
| (2 Stunden bei 105°C) | | |
| Glühverlust⁴⁾⁷⁾ (2 Stunden bei 1000°C) % | | < 3 |
| pH-Wert⁵⁾ | | 4,5-5,5 |
| SiO₂⁸⁾ | | < 0,1 |
| Al₂O₃⁸⁾ | | < 99,6 |
| Fe₂O₃⁸⁾ | | < 0,2 |
| TiO₂⁸⁾ | | > 0,1 |
| HCI ⁸⁾⁹⁾ | | < 0,5 |
| Siebrückstand⁶⁾ (nach Mocker, 45 µm) | % | < 0,05 |

| | | |
|---|---|---|
| 1) nach DIN 66131 | | |
| 2) nach DIN ISO 787/XI, JIS K 5101/18 (nicht gesiebt) | | |
| 3) nach DIN ISO 787/II, ASTM D 280, JIS K 5101/21 | | |
| 4) nach DIN 55921, ASTM D 1208, JIS K 5101/23 | | |
| 5) nach DIN ISO 787/IX;ASTM D !"=(; JIS K 5101/24 | | |
| 6) nach DIN ISO 787/XVIII; JIS K 5101/20 | | |
| 7) bezogen auf die 2 Stunden bei 105°C getrocknete Substanz | | |
| 8) bezogen auf die 2 Stunden bei 1000°C geglühte Substanz | | |
| 9) HCI-Gehalt ist Bestandteil des Glühverlustes | | |

Das Plasmaspritzverfahren ist bekannt aus S. Jiansirisomboon et al. Journal of European Ceramic Society 23 (2003), 961-976.

Das Plasmaspritzen gehört zu den thermischen Spritzverfahren. Beim atmosphärischen Plasmaspritzen (APS) wird mit Hilfe eines Gleichstromes zwischen einer wassergekühlten Anode und einer wassergekühlten Kathode ein Plasma aus einem Gas (Primärgas) erzeugt. Bei diesem Gas handelt es sich z.B. um Stickstoff oder Formiergas. Je nach Art des Gases können unterschiedliche Temperaturen in der Plasmaflamme erzeugt werden. Bei dieser Art des Plasmas (thermisches Plasma) wird die hohe Temperatur (einige 10000 K) dadurch erhalten, daß die dissoziierten Ionen im Plasma rekombinieren.

Zusätzlich zu der hohen Temperatur des Plasmas treten sehr hohe Gasaustrittsgeschwindigkeiten aus der Plasmapistole auf. Diese können im Bereich von einigen 100 m/s liegen. Dadurch treffen die Partikel, die in der Flamme aufgeschmolzen werden, mit hoher Geschwindigkeit auf das Substrat auf. Dabei wird ein Teil der Auftreffenergie in Wärme umgewandelt.

Die Gasgeschwindigkeit kann durch Einleiten eines zusätzlichen Gases (Sekundärgas) variiert und erhöht werden.

Durch die hohen Flammtemperaturen und die hohen Gasgeschwindigkeiten können auch hochschmelzende Materialien, wie Al₂O₃, ZrO₂ oder W, verarbeitet werden.

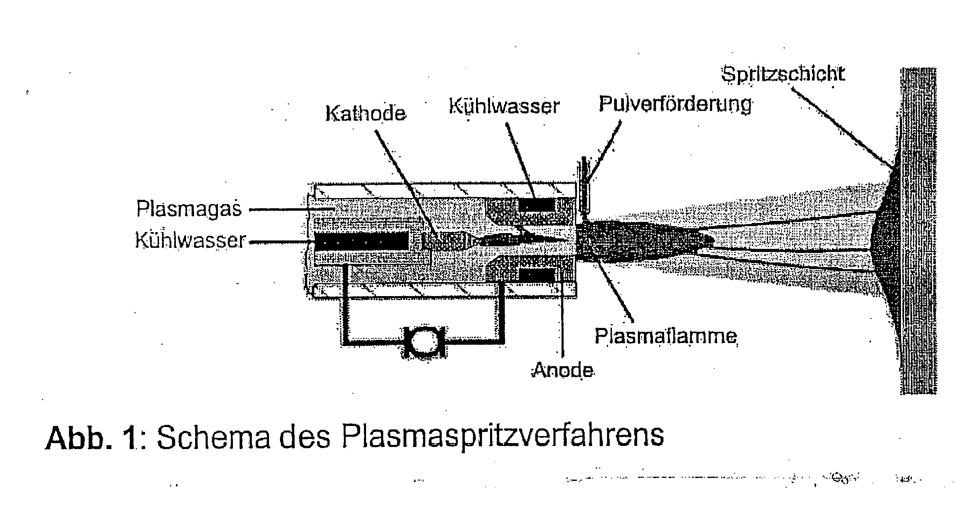

Das Ausgangspulver wird mit Hilfe eines Gasstromes entweder axial oder radial direkt in die Plasmaflamme eingegeben. Das Schema des Verfahrens ist in Figur 1 dargestellt. Folgende Parameter können beim atmosphärischen Flammenspritzen variiert werden, wodurch die Eigenschaften der Schichten vorgegeben werden: Elektrische Leistung (Flammtemperatur), Primärgasfluss (Flammtemperatur, Gasaustrittsgeschwindigkeit), Sekundärgasfluss (Gasaustrittsgeschwindigkeit), Pulverförderrate (Schichtauftragsrate), Abstand Substrat - Plasmapistole (Verweilzeit der Partikel in der Flamme).

Die Schichtdicken plasmagespritzter Schichten liegen im Bereich von einigen µm bis einigen cm.

Je nach Art der gespritzten Schicht und der Anwendung kommen unterschiedliche Substratwerkstoffe in Frage. Meist dient die plasmagespritzte Schicht dazu, eine Eigenschaftsverbesserung des Substratmaterials hervorzurufen.

So kann durch eine solche funktionale Al₂O₃-Schicht die Verschleißbeständigkeit, die thermische Isolation oder die Korrosionsbeständigkeit verbessert werden. Es kommen sowohl Metalle (z.B. Stähle), Keramiken (z.B. Al₂O₃ oder ZrO₂) als auch Gläser (z.B. Borosilikatglas) als Substrate in Frage.

Allerdings müssen die linearen Ausdehnungskoeffizienten der Substrate und der Schichten aufeinander abgestimmt sein, um ein Abplatzen der Schicht zu verhindern. Bei stark unterschiedlichen Ausdehnungskoeffizienten kann mit Zwischenschichten (z.B. Ni-Cr-Al) gearbeitet werden, deren Ausdehnungskoeffizienten zwischen denen der Substrate und den eigentlichen funktionalen Schichten liegen.

Bei Al₂O₃-Schichten auf Basis von Aluminiumoxidgranulat kann vorteilhafterweise z.B. mit Ni-Cr-Al als Zwischenschicht gearbeitet werden, wenn Stahl als Substrat verwendet wird.

Schichten aus Aluminiumoxid finden Anwendung im Bereich des Verschleiß- oder Korrosionsschutzes, z.B. bei Bauteilen für Schiffe oder Flugzeuge. Es wird erwartet durch den Einsatz von Schichten mit nanoskaligem Gefüge die Eigenschaften solcher Schichten dahingehend zu beeinflussen zu können, sodaß eine höhere Verschleiß- und Korrosionsbeständigkeit gegeben ist. Grundlage hierfür ist die Minimierung der Defekte wie Risse und Poren innerhalb der Schicht.

Das erfindungsgemäße Verfahren weist den Vorteil auf, daß insbesondere die Förderanlagen auf Grund der Eigenschaften, wie Rieselfähigkeit, des eingesetzten Aluminiumoxidgranulates nicht verstopfen.

## Patentansprüche

1. Plasmagespritzte Schichten aus Aluminiumoxid auf einem Substrat, **dadurch gekennzeichnet, daß** das Aluminiumoxid ein pyrogen hergestelltes Aluminiumoxid ist.

2. Verfahren zur Herstellung der plasmagespritzten Schichten aus Aluminiumoxid auf einem Substrat gemäß Anspruch 1, **dadurch gekennzeichnet, daß** man als Ausgangspulver ein pyrogen hergestelltes Aluminiumoxid einsetzt.
